# EUROPEAN PATENT APPLICATION

(11) **EP 2 717 129 A1**
(43) Date of publication of application: **09.04.2014**
(21) Application number: 12789724.7
(22) Date of filing: 23.05.2012
(51) Int. Cl.: G06F 3/041, G06F 3/023, G06F 3/048, H03M 11/04

(54) **INPUT DEVICE, INPUT METHOD, AND PROGRAM**

(30) Priority: 25.05.2011 JP 2011116637
(71) Applicant: NEC CASIO Mobile Communications, Ltd., Kawasaki-shi Kanagawa 211-8666 (JP)
(72) Inventor: SUEMUNE, Taturo, Kawasaki-shi Kanagawa 211-8666 (JP)
(74) Representative: Vossius & Partner
(86) International application number: PCT/JP2012/063207
(87) International publication number: WO 2012/161223

(57) **Abstract**

An input device comprises: an operation detection unit that detects a slide operation by an object that is into contact with or is close to the input device; an operation error storage unit that stores a first slide operation that is canceled and a second slide operation detected after the cancellation in association with each other; and an operation correction unit that, if the first slide operation is detected after the first slide operation is canceled a predetermined number of times or more, corrects the first slide operation based on the second slide operation associated with the first slide operation in the operation error storage unit. The input device achieves correction of an input error made by a user when giving an input based on a slide operation.

## Description

### TECHNICAL FIELD

### (Reference to Related Application)

The present invention is based upon and claims the benefit of the priority of Japanese Patent Application No. 2011-116637, filed on May 25, 2011, the disclosure of which is incorporated herein in its entirety by reference thereto. The present invention relates to an input device, an input method, and a program. In particular, it relates to an input device, an input method, and a program correcting an input error made by a user when giving an input based on a slide operation.

### BACKGROUND

In recent years, as input means for electronic information devices, touch panels have been used more frequently, instead of dedicated hard keys exclusively used for key inputs. When a user uses a mobile terminal such as a smartphone including a touch panel, since the size of the operation unit is limited, the user is required to perform subtle touch operations.

Thus, when the user gives an input on such touch panel, more input errors could be caused, as compared with cases where the user gives an input to a mobile terminal including hard keys. In addition, when a capacitive touch panel is used, depending on sensitivity thereof, an input not intended by the user could be detected, resulting in an input error.

Patent Literature 1 discloses a keyboard device that reduces input errors caused when a user presses a surrounding key by mistake. Patent Literature 1 discloses a technique for controlling the range of accepting a key input by a user, based on input coordinates erroneously inputted by the user on a touch panel and displacement from the target key.

### CITATION LIST

### PATENT LITERATURE

Patent Literature 1:
Japanese Patent Kokai Publication No. JP2000-066817A

### SUMMARY

### TECHNICAL PROBLEM

The following analysis has been made by the present inventor.

When giving an input on a touch panel of a mobile terminal such as a smartphone, a user performs input operations not only by touching a certain portion on the touch panel but also by moving (sliding) a finger on the touch panel (hereinafter referred to as "a slide operation"). For example, a flick input is known as a Japanese word input method used for a touch screen of a smartphone.

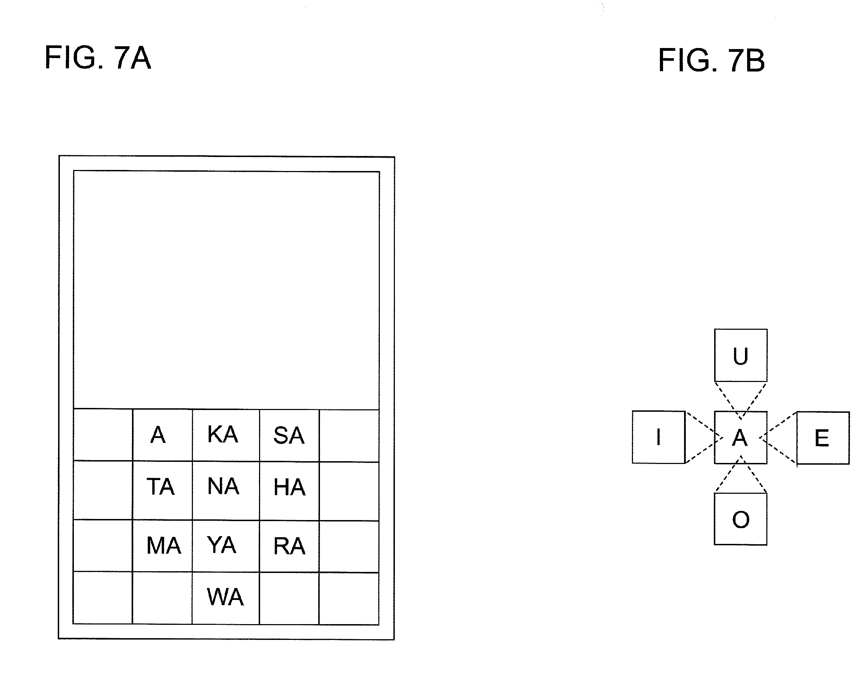

Figs. 7A and 7B illustrate an example of a configuration of a touch panel capable of accepting a flick input. As illustrated in Fig. 7, on a touch panel capable of accepting a flick input, syllables in "a" row ("a," "ka," "sa," "ta," "na," "ha," "ma," "ya," "ra," and "wa") are arranged, as in a numerical keypad. In addition, surrounding each of these syllables of the "a" row, corresponding syllables of the other four rows are potentially (or invisibly) arranged, for example, in a cross shape or in a fan shape (syllables corresponding to "i," "u," "e," and "o" rows). The syllables in "i" to "o" rows are not necessarily indicated on the display screen. The user inputs any one of these syllables by sliding (flipping) a finger in a direction of a target syllable while pressing a key in the "a" row.

For example, if the syllables in "i" to "o" rows are arranged as illustrated in Fig. 7B, in order to input "u," the user presses the point indicated by "a" in Fig. 7A with a finger and quickly slides the finger upward on the touch panel.

According to the technique disclosed in Patent Literature 1, an input error made by a user in a simple input operation such as a touch input can be corrected. However, input errors made by a user in an input operation including a slide operation such as a flick input or a drag input cannot be corrected, counted as a problem.

Thus, there is a problem to be solved. Namely, it is necessary to achieve correction of an input error made by a user when giving an input based on a slide operation. It is an object of the present invention to provide an input device, an input method, and a program that solve the problem.

### SOLUTION TO PROBLEM

According to a first aspect of the present invention, there is provided an input device, comprising: an operation detection unit that detects a slide operation by an object that is into contact with or is close to the input device; an operation error storage unit that stores a first slide operation that is canceled and a second slide operation detected after the cancellation in association with each other; and an operation correction unit that, if the first slide operation is detected after the first slide operation is canceled a predetermined number of times or more, corrects the first slide operation based on the second slide operation associated with the first slide operation in the operation error storage unit.

According to a second aspect of the present invention, there is provided an input method, comprising: detecting a slide operation by an object that is into contact with or is close to a device; storing a first slide operation that is canceled and a second slide operation detected after the cancellation in association with each other; and, if the first slide operation is detected after the first slide operation is canceled a predetermined number of times or more, correcting the first slide operation based on the second slide operation associated with the first slide operation in the storage device.

According to a third aspect of the present invention, there is provided a program, causing a computer to execute: detecting a slide operation by an object that is into contact with or is close to a device;
storing a first slide operation that is canceled and a second slide operation detected after the cancellation in association with each other in a storage device; and, if the first slide operation is detected after the first slide operation is canceled a predetermined number of times or more, correcting the first slide operation based on the second slide operation associated with the first slide operation in the storage device.

### ADVANTAGEOUS EFFECTS OF INVENTION

An input device, an input method, and a program according to the present invention can correct an input error made by a user when giving an input based on a slide operation.

### BRIEF DESCRIPTION OF DRAWINGS

Fig. 1 is a block diagram schematically illustrating a configuraiton of an input device according to the present invention.
Figs. 2A and 2B illustrate a key input screen of a mobile terminal including the input device according to the first exemplary embodiment.
Fig. 3 is a block diagram illustrating a configuration of the mobile terminal including the input device according to the first exemplary embodiment.
Fig. 4 is a flow chart illustrating an operation of the input device according to the first exemplary embodiment.
Fig. 5 illustrates an operation of the input device according to the first exemplary embodiment.
Figs. 6A and 6B illustrate a key input screen of a mobile terminal including an input device according to a second exemplary embodiment.
Figs. 7A and 7B illustrate a flick input.

### DESCRIPTION OF EMBODIMENTS

First, an outline of the present invention will be described. In the following outline, the reference characters are merely used as examples to facilitate understanding of the present invention. Thus, the reference characters are not intended to limit the present invention to the illustrated modes.

According to the present invention, when a user cancels an input based on a slide operation (for example, a flick input on a touch panel) (by pressing a CLR (Clear) key, a DEL (Delete) key, or the like, for example), tendency or a habit of the user in a slide operation is learned. Based on such learning, an input error caused by a user's slide operation is corrected. For example, an input operation performed after a CLR key or a DEL key is pressed is determined to be a correct slide operation. After a CLR key or a DEL key is operated, if an input operation that is not related to the canceled operation is performed, learning is not performed. In this way, the user can smoothly perform an intended input operation.

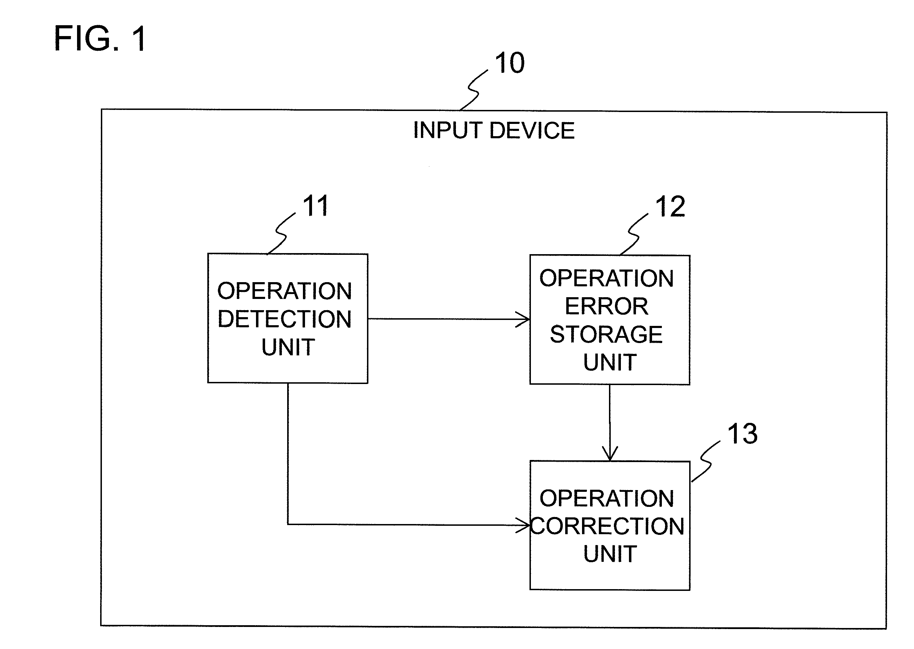

Fig. 1 is a block diagram schematically illustrating a configuration of an input device according to the present invention. As illustrated in Fig. 1, an input device (10) according to the present invention comprises: an operation detection unit (11) (for example, a touch panel, touchpad, or the like) that detects a slide operation by an object (for example, a user's finger, a stylus, or the like) that is into contact with or is close to the input device; an operation error storage unit (12) that, if a slide operation is canceled, stores the canceled slide operation and a slide operation detected immediately after the cancellation in association with each other; and an operation correction unit (13) that, if a predetermined slide operation is detected after the predetermined slide operation is canceled a predetermined number of times or more, corrects the predetermined slide operation based on the slide operation associated with the predetermined slide operation in the operation error storage unit (12).

The operation detection unit (11) may detect a slide operation as a directional vector. In such case, if a slide operation is canceled, the operation error storage unit (12) stores a directional vector corresponding to the canceled slide operation and a directional vector corresponding to the slide operation detected immediately after the cancellation in association with each other. If a predetermined slide operation is detected after the predetermined slide operation is canceled a predetermined number of times or more, the operation correction unit (13) replaces a directional vector corresponding to the predetermined slide operation with a directional vector corresponding to the slide operation associated with the predetermined slide operation in the operation error storage unit (12).

In addition, after a slide operation included in a predetermined angular width having a predetermined directional vector as a center is canceled a predetermined number of times or more, if a slide operation included in the predetermined angular width is detected, the operation correction unit (13) may replace a directional vector corresponding to the detected slide operation with an average value of directional vectors corresponding to slide operations that are respectively associated with a plurality of slide operations included in the predetermined angular width in the operation error storage unit (12).

The predetermined directional vector may be an average value of directional vectors corresponding to a plurality of canceled slide operations among slide operations included in the predetermined angular width. Alternatively, the predetermined directional vector may be a weighted average value of directional vectors corresponding to a plurality of canceled slide operations among slide operations included in the predetermined angular width. For example, the predetermined directional vector may be a weighted average value obtained by giving relatively larger weight to directional vectors corresponding to slide operations that are canceled more recently.

The input device (10) according to the present invention can correct an input error made by a user when giving an input based on a slide operation. In addition, according to the present invention, there is provided a key correction method in view of tendency of a user when giving an input to a key input device using a touch panel. In addition, according to the present invention, there is provided a method for correcting a canceled input error made by a user. In this method, if an input is canceled, inputs before and after the cancelation are compared with each other.

According to the present invention, the following modes are possible.

### (Mode 1)

An input device may be the input device according to the above first aspect.

### (Mode 2)

The operation detection unit may detect a slide operation as a directional vector. If a slide operation is canceled, the operation error storage unit may store a directional vector corresponding to the canceled slide operation and a directional vector corresponding to the slide operation detected immediately after the cancellation in association with each other. If a predetermined slide operation is detected after the predetermined slide operation is canceled a predetermined number of times or more, the operation correction unit may replace a directional vector corresponding to the predetermined slide operation with a directional vector corresponding to the slide operation associated with the predetermined slide operation in the operation error storage unit.

### (Mode 3)

After a slide operation included in a predetermined angular width having a predetermined directional vector as a center is canceled a predetermined number of times or more, if a slide operation included in the predetermined angular width is detected, the operation correction unit may replace a directional vector corresponding to the detected slide operation with an average value of directional vectors corresponding to slide operations that are respectively associated with a plurality of slide operations included in the predetermined angular width in the operation error storage unit.

### (Mode 4)

The predetermined directional vector may be an average value of directional vectors corresponding to a plurality of canceled slide operations among slide operations included in the predetermined angular width.

### (Mode 5)

The predetermined directional vector may be a weighted average value of directional vectors corresponding to a plurality of canceled slide operations among slide operations included in the predetermined angular width.

### (Mode 6)

The predetermined directional vector may be a weighted average value obtained by giving relatively larger weight to directional vectors corresponding to slide operations that are canceled more recently.

### (Mode 7)

A mobile terminal may comprise the above input device.

### (Mode 8)

An input method may be the input method according to the above second aspect.

### (Mode 9)

The detecting may comprise detecting a slide operation as a directional vector. If a slide operation is canceled, the storing may comprise storing a directional vector corresponding to the canceled slide operation and a directional vector corresponding to the slide operation detected immediately after the cancellation in association with each other. If a predetermined slide operation is detected after the predetermined slide operation is canceled a predetermined number of times or more, the correcting may comprise replacing a directional vector corresponding to the predetermined slide operation with a directional vector corresponding to the slide operation associated with the predetermined slide operation in the storage device.

### (Mode 10)

After a slide operation included in a predetermined angular width having a predetermined directional vector as a center is canceled a predetermined number of times or more, if a slide operation included in the predetermined angular width is detected, the correcting may comprise replacing a directional vector corresponding to the detected slide operation with an average value of directional vectors corresponding to slide operations that are respectively associated with a plurality of slide operations included in the predetermined angular width in the storage device.

### (Mode 11)

A program may be the program according to the above third aspect.

### (Mode 12)

The detecting may comprise detecting a slide operation as a directional vector. If a slide operation is canceled, the storing may comprise storing a directional vector corresponding to the canceled slide operation and a directional vector corresponding to the slide operation detected immediately after the cancellation in association with each other. If a slide operation is detected after the slide operation is canceled a predetermined number of times or more, the correcting may comprise replacing a directional vector corresponding to the predetermined slide operation with a directional vector corresponding to the slide operation associated with the predetermined slide operation in the storage device.

### (Mode 13)

After a slide operation included in a predetermined angular width having a predetermined directional vector as a center is canceled a predetermined number of times or more, if a slide operation included in the predetermined angular width is detected, the correcting may comprise replacing a directional vector corresponding to the detected slide operation with an average value of directional vectors corresponding to slide operations that are respectively associated with a plurality of slide operations included in the predetermined angular width in the storage device.

### (First Exemplary Embodiment)

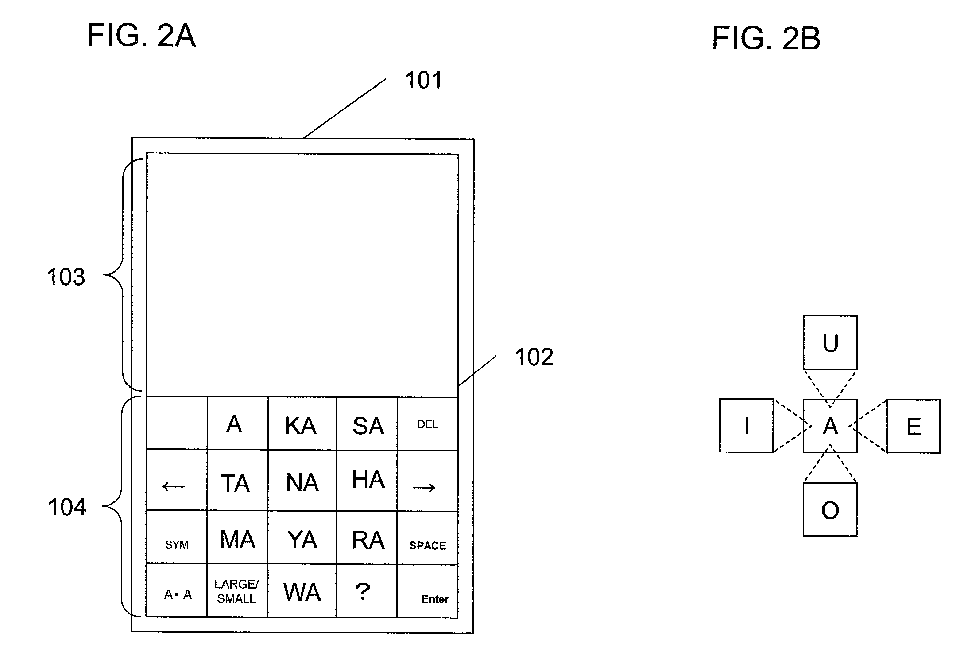

An input device according to the first exemplary embodiment will be described with reference to the drawings. Figs. 2A and 2B illustrate a configuration of a key input screen of a mobile terminal including an input device according to the present exemplary embodiment. In Figs. 2A and 2B, a key input screen of a mobile terminal including a touch panel is illustrated as an example. The input device according to the present invention is applicable not only to a mobile phone or a smartphone but also to another device (for example, a game console, a tablet PC (Personal Computer), or a laptop PC).

A mobile terminal 101 includes an LCD (liquid crystal display) 102 having a touch panel function on the entire surface. Fig. 2A illustrates a key input screen as an example. As illustrated in Fig. 2A, the LCD 102 displays a display unit 103 displaying key input and an input operation unit 104 serving as a touch panel. Fig. 2B illustrates an operation screen based on flick input, as frequently seen on a mobile terminal having a touch panel function on the entire surface.

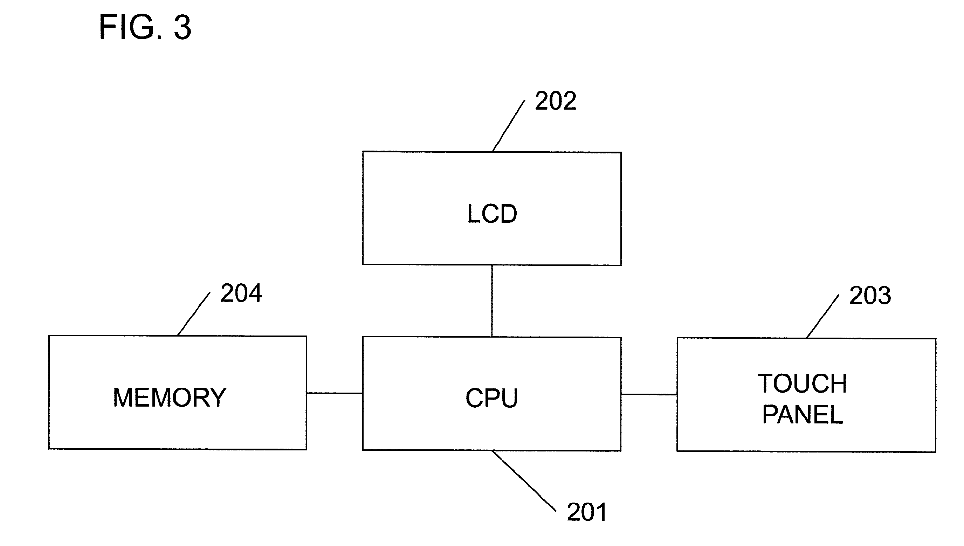

Fig. 3 is a block diagram illustrating a configuration of the mobile terminal 101 including the input device according to the present exemplary embodiment. For simplicity, Fig. 3 illustrates only the modules relating to the present invention. As illustrated in Fig. 3, the mobile terminal includes a CPU (Central Processing Unit) 201, an LCD 202, a touch panel 203, and a memory 204.

For example, the operation detection unit 11 in Fig. 1 can be realized by the CPU 201 in Fig. 3 and a program that operates on the touch panel 203, the memory 204, and the CPU 201. Each of the operation error storage unit 12 and the operation correction unit 13 can be realized by the CPU 201 and a program that operates on the memory 204, and the CPU 201.

The CPU 201, the LCD 202, and the touch panel 203 serve as a control unit, a display device, and an input device, respectively. The touch panel 203 is arranged on the top surface of the LCD 202. By operating the input screen displayed on the LCD 202 via the touch panel 203, the user can intuitively operate the mobile terminal. In addition, the memory 204 is a rewritable storage device having a temporary storage area and a long-term storage area.

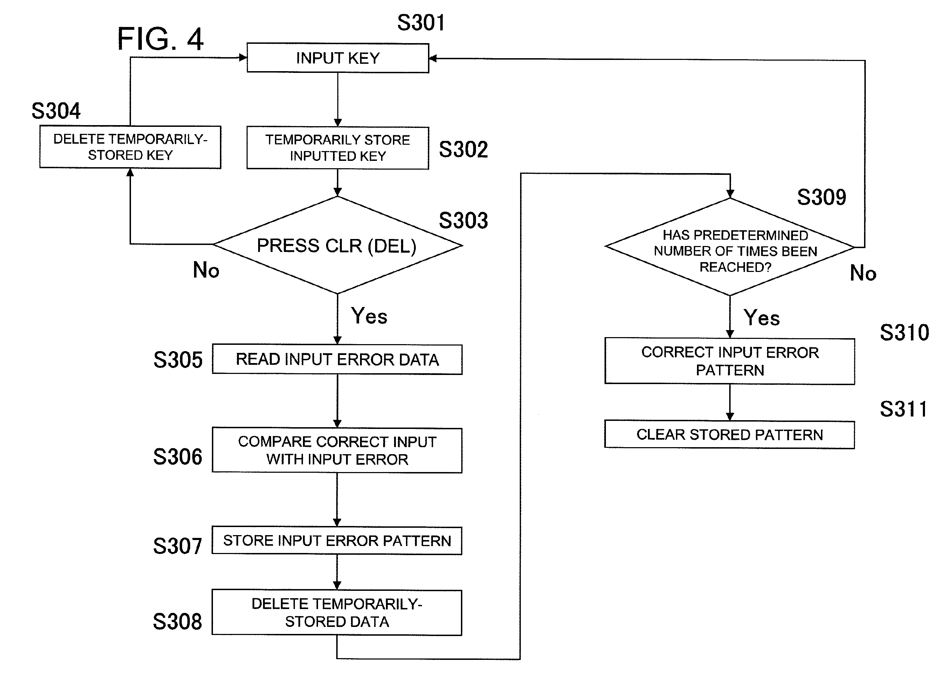

Fig. 4 is a flow chart illustrating an operation of the input device according to the present exemplary embodiment. A control flow of a method for correcting a key input on the mobile terminal including the touch panel will be described with reference to Fig. 4.

To input a key via the touch panel, a user operates the input operation unit 104 (step S301). In the present exemplary embodiment, the inputted key is temporarily stored in the memory 204 (step S302).

If the user makes an error in inputting the key, the user presses a CLR key, a DEL key, or the like to cancel the inputted key (Yes in step S303). If the user has inputted a correct key and ends the key input application in operation (No in step S303), to reduce the memory usage, the key input data temporarily stored in the memory 204 is deleted (step S304).

If the user presses a CLR (or DEL) key (step S303), key input pattern data, which represents the error input stored in the memory 204, is read (step S305). Next, the data is compared with subsequently-inputted correct input pattern data (step S306). Next, the difference between the above data is stored in the long-term storage area of the memory 204, as an input error pattern (step S307).

Next, to reduce the memory usage, the input error pattern data and the correct input pattern data, which is obtained after the user corrects the input error pattern, both of the data having been temporarily stored in the memory 204, are deleted (step S308).

Next, how many times the input error pattern has been stored in the long-term storage area of the memory 204 is checked (step S309).

If a predetermined number of times is not reached (No in step S309), the operation returns to step S301 and detection of a key input is continued. However, if the same input error is repeated a predetermined number of times (Yes in step S309), the input error pattern is corrected (step S310). As a method of correcting the input error pattern, firmware of the touch panel 203 may be rewritten. After correcting the input error pattern, to reduce the memory usage, the input error pattern data stored in the memory 204 in a long term is deleted (step S311).

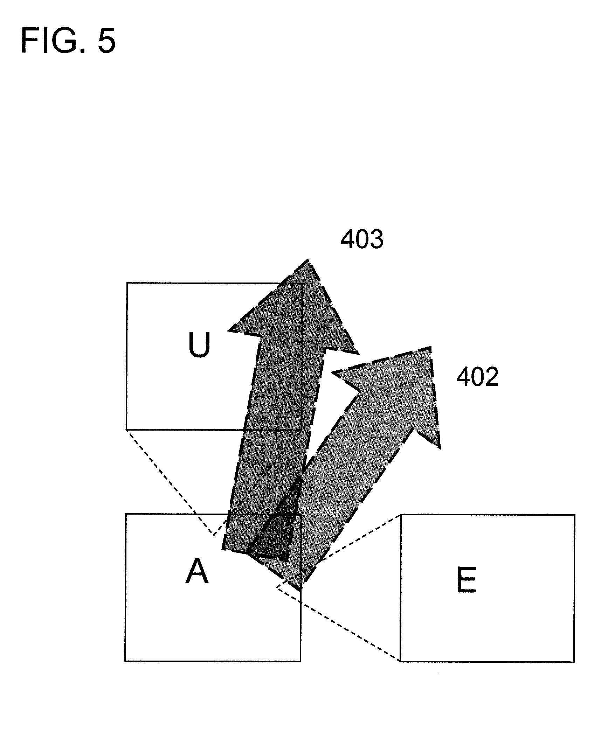

Fig. 5 illustrates an input error pattern correction method. If a user places a finger on "a" on the touch panel 203 and performs a slide operation in the direction of a directional vector 402 while intending to input "u" by performing a flick input, the user operation is detected as input of "e." As a result, "e" is displayed on the LCD 202. In this case, the user operates a CLR key to cancel the input of "e" and performs a slide operation in the direction of a directional vector 403 on the touch panel 203. As a result, input of "u" is detected, and "u" is displayed on the LCD 202.

In this case, the input pattern in the directional vector 402 is treated as an input error pattern obtained when input of "u" intended by the user results in input of "e" by mistake. The input pattern in the directional vector 403 is treated as a correct input pattern originally intended by the user. Data corresponding to the difference between these two input patterns, for example, data for correcting the direction of the user operation from the directional vector 402 to the directional vector 403 is stored.

If the same input error pattern is repeated a predetermined number of times or more (Yes in step S309), it can be determined that the user tends to perform a slide operation in the direction of the directional vector 402 when inputting "u." In this case, correction of treating the slide operation in the direction of the directional vector 402 as input of "u" is performed (step S310). In this way, it is possible to realize key control in view of key input tendency of a user.

According to the present exemplary embodiment, it is possible to realize key control in view of key input tendency or of a habit of each mobile terminal user. Thus, users can be provided with less stressful, intuitive input operations.

The present exemplary embodiment has been described assuming that the touch panel 203 is used as the input means for detecting a slide operation. However, the input means according to the present invention is not limited to the touch panel 203. The input means may be a touchpad or the like that does not have a display function.

In addition, the directional vector 402 in Fig. 5 may not be fixed but vary per operation. Thus, after a predetermined number of times or more of slide operations included in a predetermined angular width having a predetermined directional vector as a center is canceled, if a slide operation included in the predetermined angular width is detected, the directional vector corresponding to the detected slide operation may be corrected. In addition, the directional vector corresponding to the detected slide operation may be replaced with an average value of the directional vectors corresponding to the slide operations inputted after the cancellation.

Generally, a device constituting a touch panel outputs coordinate data as an interrupt signal. The firmware of the CPU or the touch panel receiving this signal detects a user's slide operation on the touch panel by converting intervals of interrupt signals and change of the coordinate data into vector data. Such touch panel can express a slide operation as a combination of a movement vector and movement time (operation time), for example.

### (Second Exemplary Embodiment)

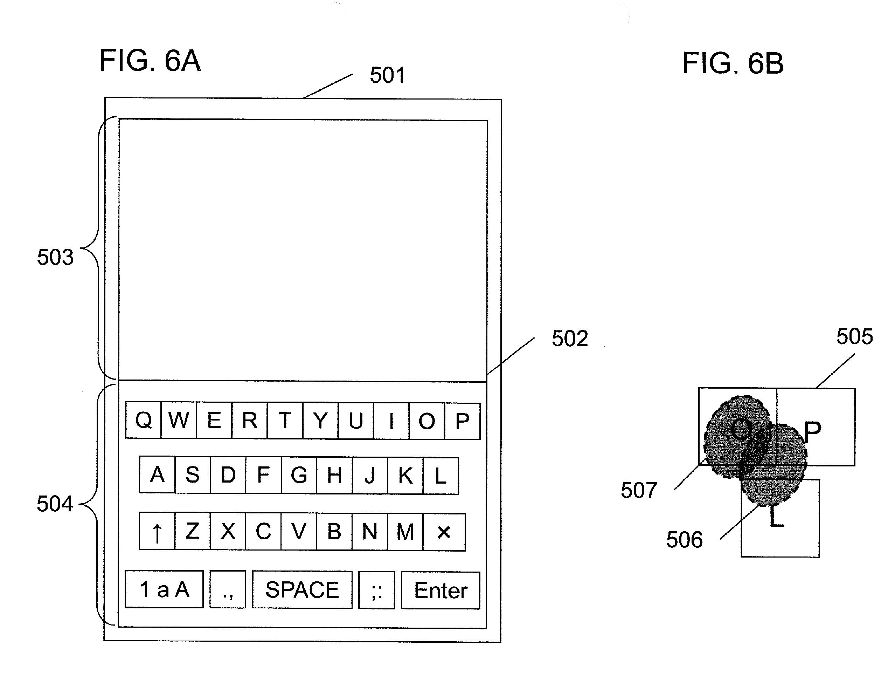

An input device according to a second exemplary embodiment will be described with reference to the drawings. Figs. 6A and 6B illustrate a configuration of a key input screen of a mobile terminal including an input device according to the present exemplary embodiment.

The first exemplary embodiment has been described, illustrating key input using a touch panel based on flick input. However, the key input correction control method (Fig. 4) as described in the first exemplary embodiment is also applicable to key input using a touch panel displaying a QWERTY keyboard of a personal computer or the like.

Figs. 6A and 6B illustrate a configuration of a touchpad of a mobile terminal 501 including an input device according to the present exemplary embodiment. As illustrated in Figs. 6A and 6B, the mobile terminal 501 includes an LCD 502 having a touch panel function on the entire surface. As illustrated in Fig. 6A, the LCD 502 displays a display unit 503 displaying key input and an input operation unit 504 using a touch panel. The mobile terminal 501 according to the present exemplary embodiment has the same configuration as that (Fig. 3) of the mobile terminal according to the first exemplary embodiment.

Fig. 6B illustrates an input error pattern correction method. A user touches a position 506 on the QWERTY keyboard on the input operation unit 504. This user operation is detected as input of "L" and "L" is displayed on the LCD 502. Next, the user operates a CLR key to cancel the input of "L" and touches a position 507 on the touch panel 203. As a result, input of "O" is detected, and "O" is displayed on the LCD502.

In this case, while the user intends to input "O," "L" is inputted by mistake. Thus, the input pattern obtained by touching the position 506 is treated as an input error pattern. In contrast, the input pattern obtained by touching the position 507 is treated as a correct input pattern originally intended by the user. In addition, these two input patterns are compared, and user operation data for correcting pressing of the position 506 to pressing of the position 507 is stored.

If the same input error pattern is repeated a predetermined number of times or more (Yes in step S309), it can be determined that the user tends to touch the position 506 when inputting "O." In this case, correction of treating the touch operation on the position 506 as input of "O" is performed (step S310). In this way, even when key input using a touch panel displaying a QWERTY keyboard is used, it is possible to realize key control in view of key input tendency of a user.

The disclosure of prior art including the above Patent Literature is incorporated herein by reference thereto. Modifications and adjustments of the exemplary embodiments and examples are possible within the scope of the overall disclosure (including the claims) of the present invention and based on the basic technical concept of the present invention. Various combinations and selections of various disclosed elements (including the elements in each of the claims, the examples, the drawings, etc.) are possible within the scope of the claims of the present invention. That is, the present invention of course includes various variations and modifications that could be made by those skilled in the art according to the overall disclosure including the claims and the technical concept.

### REFERENCE SIGNS LIST

- 10: input device
- 11: operation detection unit
- 12: operation error storage unit
- 13: operation correction unit
- 101: mobile terminal
- 102: LCD
- 103: display unit
- 104: input operation unit
- 201: CPU
- 202: LCD
- 203: touch panel
- 204: memory
- 402, 403: directional vector
- 501: mobile terminal
- 502: LCD
- 503: display unit
- 504: input operation unit
- 505: input error example
- 506, 507: position

## Claims

1. An input device, comprising:
an operation detection unit that detects a slide operation by an object that is into contact with or is close to the input device;
an operation error storage unit that stores a first slide operation that is canceled and a second slide operation detected after the cancellation in association with each other; and
an operation correction unit that, if the first slide operation is detected after the first slide operation is canceled a predetermined number of times or more, corrects the first slide operation based on the second slide operation associated with the first slide operation in the operation error storage unit.

2. The input device according to claim 1;
wherein the operation detection unit detects a slide operation by the object as a directional vector;
wherein the operation error storage unit stores a first directional vector corresponding to the first slide operation and a second directional vector corresponding to the second slide operation in association with each other; and
wherein, if the first slide operation is detected after the first slide operation is canceled a predetermined number of times or more, the operation correction unit replaces the first directional vector corresponding to the first slide operation with the second directional vector corresponding to the second slide operation associated with the first slide operation in the operation error storage unit.

3. The input device according to claim 2;
wherein, after a slide operation included in a predetermined angular width having a predetermined directional vector as a center is canceled a predetermined number of times or more, if a slide operation included in the predetermined angular width is detected, the operation correction unit replaces a directional vector corresponding to the detected slide operation with an average value of directional vectors corresponding to slide operations that are respectively associated with a plurality of slide operations included in the predetermined angular width in the operation error storage unit.

4. The input device according to claim 3;
wherein the predetermined directional vector is an average value of a plurality of directional vectors respectively corresponding to a plurality of canceled slide operations among slide operations included in the predetermined angular width.

5. The input device according to claim 3;
wherein the predetermined directional vector is a weighted average value of a plurality of directional vectors respectively corresponding to a plurality of canceled slide operations among slide operations included in the predetermined angular width.

6. The input device according to claim 3;
wherein the predetermined directional vector is a weighted average value obtained by giving relatively larger weight to directional vectors corresponding to slide operations that are canceled more recently among slide operations included in the predetermined angular width.

7. A mobile terminal, comprising the input device according to any one of claims 1 to 6.

8. An input method, comprising:
detecting a slide operation by an object that is into contact with or is close to a device;
storing a first slide operation that is canceled and a second slide operation detected after the cancellation in association with each other; and
if the first slide operation is detected after the first slide operation is canceled a predetermined number of times or more, correcting the first slide operation based on the second slide operation associated with the first slide operation in the storage device.

9. The input method according to claim 8;
wherein the detecting comprises detecting a slide operation by the object as a directional vector;
wherein the storing comprises storing a first directional vector corresponding to the first slide operation and a second directional vector corresponding to the second slide operation in association with each other; and
wherein, if the first slide operation is detected after the first slide operation is canceled a predetermined number of times or more, the correcting comprises replacing the first directional vector corresponding to the first slide operation with the second directional vector corresponding to the second slide operation associated with the first slide operation in the storage device.

10. The input method according to claim 9;
wherein, after a slide operation included in a predetermined angular width having a predetermined directional vector as a center is canceled a predetermined number of times or more, if a slide operation included in the predetermined angular width is detected, the correcting comprises replacing a directional vector corresponding to the detected slide operation with an average value of directional vectors corresponding to slide operations that are respectively associated with a plurality of slide operations included in the predetermined angular width in the storage device.

11. A program, causing a computer to execute:
detecting a slide operation by an object that is into contact with or is close to a device;
storing a first slide operation that is canceled and a second slide operation detected after the cancellation in association with each other in a storage device; and
if the first slide operation is detected after the first slide operation is canceled a predetermined number of times or more, correcting the first slide operation based on the second slide operation associated with the first slide operation in the storage device.

12. The program according to claim 11;
wherein the detecting comprises detecting a slide operation by the object as a directional vector;
wherein the storing comprises storing a first directional vector corresponding to the first slide operation and a second directional vector corresponding to the second slide operation in association with each other; and
wherein, if the first slide operation is detected after the first slide operation is canceled a predetermined number of times or more, the correcting comprises replacing the first directional vector corresponding to the first slide operation with the second directional vector corresponding to the second slide operation associated with the first slide operation in the storage device.

13. The program according to claim 12;
wherein, after a slide operation included in a predetermined angular width having a predetermined directional vector as a center is canceled a predetermined number of times or more, if a slide operation included in the predetermined angular width is detected, the correcting comprises replacing a directional vector corresponding to the detected slide operation with an average value of directional vectors corresponding to slide operations that are respectively associated with a plurality of slide operations included in the predetermined angular width in the storage device.
